# EUROPÄISCHE PATENTSCHRIFT

(11) **EP 0 470 947 B1**
(45) Veröffentlichungstag und Bekanntmachung des Hinweises auf die Patenterteilung: **16.02.1994**
(21) Anmeldenummer: 91890172.9
(22) Anmeldetag: 06.08.1991
(51) Int. Cl.: B60Q 1/26, B60Q 1/30

(54) **Warnleuchte**
Warning light
Feu de signalisation

(30) Priorität: 07.08.1990 AT 1659/90
(43) Veröffentlichungstag der Anmeldung: 12.02.1992
(73) Patentinhaber: FUTURIT WERK Aktiengesellschaft, A-1232 Wien (AT); MBB Förder- und Hebesysteme GmbH, 27738 Delmenhorst (DE)
(72) Erfinder: Hauer, Kurt, A-1040 Wien (AT); Brandt, Hermann, Dipl.-Ing., W-2800 Bremen (DE)
(74) Vertreter: Piso, Eberhard, Dr.

(56) Entgegenhaltungen:
- DE-A- 2 417 584
- DE-A- 3 836 032
- DE-U- 8 530 444
- US-A- 3 335 268

## Beschreibung

Die Erfindung betrifft eine Warnleuchte, insbesondere zur Sicherung bewegter Flächen bei Fahrzeugen, mit einem Gehäuse und einer im Gehäuse angeordneten Lichtquelle, wobei das Gehäuse aus einer Konsole und einem mit dieser verbundenen Deckel besteht, der Deckel aus lichtdurchlässigem Material besteht und der Deckel kappenförmig ausgebildet ist.

Warnleuchten dieser Art finden vor allem Verwendung zur Absicherung von Ladeflächen, insbesondere an Fahrzeugen, können aber auch beispielsweise an Baggerschaufeln etc. angeordnet werden.

Aus der DE-U-8 530 444 ist eine einstückige, aus Kunststoff gebildete Warnleuchte bekannt, die ein kugelabschnittförmiges Gehäuse mit einem in seinem unteren Bereich vorgesehenen zylinderförmigen, unten offenen Vorsprung umfaßt, dessen Innenraum zur Aufnahme einer Birne dient. Die Warnleuchte ist durch Versenkung des zylinderförmigen Vorsprungs und mittels Schrauben auf einer Ladeplattform einbaubar.

Die US-A-3 335 268 offenbart eine Lampenkonstruktion, die ein flaches, kreisförmiges, auf einer Unterlage, z.B. einem Auto, befestigbares Reflektorelement umfaßt, das die Birne trägt und von einem, ein Linsenelement bildenden, kappenförmigen Deckel umschlossen ist.

Die DE-A-3 836 032 offenbart eine Leuchte für Kraftfahrzeuge mit den Merkmalen des Oberbegriffs des Anspruchs 1 bestehend aus einer annähernd trapezförmigen Grundplatte aus lichtdurchlässigem Material und einer auf diese aufgesetzten, schalenförmigen Abdeckung. An der Trapezbasiskante der Grundplatte ist eine sich schräg nach oben erstreckende Lichtscheibe aus lichtdurchlässigem Kunststoff sowie ein an letztgenannte im Randbereich derselben anschließender, in den Innenraum der Leuchte gerichteter, wallförmiger Vorsprung angeformt. Mittels Schrauben ist die Grundplatte auf der Außenseite eines Karosserieteils eines Kraftfahrzeuges festsetzbar. Die schalenförmige Abdeckung überragt die Grundplatte an ihren beiden seitlichen Trapezkanten sowie an ihrer Trapezoberkante und stützt sich über eine Dichtung am Karosserieteil ab, wobei insbesondere die die beiden Seitenkanten der trapezförmigen Grundplatte überragenden Randbereiche der schalenförmigen Abdeckung steil abfallen. Eine in der Leuchte angeordnete Glühlampe ist von einem bogenförmigen, gegen die Lichtscheibe hin offenen Reflektor umgeben.

Weiters ist eine bekannte, zur Zeit verwendete Warnleuchte kastenförmig ausgebildet und an einer Seite mit einem Schlitz zum Austritt von Licht versehen. Diese klobige Ausgestaltung bildet bei Anordnung an einer Ladefläche eine permanente Stolpergefahr, wodurch sie oftmals ein Hindernis darstellt, und kann insbesondere auch nicht von Fahrzeugen überfahren werden.

Aufgabe der Erfindung ist es, die oben genannten Nachteile zu vermeiden.

Die Erfindung löst die Aufgabe dadurch, daß der Rand der Konsole im Anschlußbereich an den Deckel hochgezogen ist, um über den gesamten Umfang Lichtaustritt zu ermöglichen, und daß das Gehäuse über einen größeren, vorzugsweise sichelförmigen, Bereich abgeschrägt ist um eine weitere, große Austrittsfläche für das Licht zu schaffen.

Ein weiteres Merkmal der Erfindung ist es, daß das Gehäuse kugelkalottenförmig ausgebildet ist, der Deckel und die Konsole aus Kunststoff sind und der Deckel mit der Konsole über Schrauben verbunden ist.

Außerdem besteht die Erfindung darin, daß der Deckel außenseitig mit Rippen versehen ist und die Rippen kreisförmig um die Mittelachse des Gehäuses angeordnet sind.

Schließlich besteht ein Merkmal der Erfindung darin, daß die Warnleuchte an ihrer Unterseite mit Führungsbolzen und mindestens einem stromführenden Kontaktbolzen versehen ist und daß die Konsole mit der bewegten Fläche über die Führungsbolzen oder Schrauben lösbar verbunden ist.

Die Erfindung wird nun anhand eines Ausführungsbeispieles unter Zuhilfenahme der angeschlossenen Zeichnung näher beschrieben.

Es zeigen Fig.1 einen Schnitt durch die erfindungsgemäße Warnleuchte; Fig.2 eine Draufsicht; Fig.3 eine Seitenansicht; Fig.4 einen weiteren Schnitt durch die erfindungsgemäße Warnleuchte; Fig.5 einen Schnitt durch eine andere Ausführung; und Fig.6 eine Seitenansicht der Ausführung nach Fig.5.

Das Gehäuse der Warnleuchte besteht aus einer lichtdurchlässigen Konsole (1) und einem mit dieser über Schrauben (2) verbundenen Deckel (3). Sowohl der Deckel als auch die Konsole bestehen vorzugsweise aus Kunststoff. Im Gehäuse ist eine oder auch mehrere Lichtquelle (n) (4), welche mit der Fahrzeugelektrik verbunden ist (sind), angeordnet. Der hochgezogene Umfangsbereich der Konsole ermöglicht einen Austritt von Licht über einen schmalen Bereich rund um das gesamte Gehäuse.

Weiters ist das Gehäuse über einen größeren Bereich (6), der vorzugsweise sichelförmig ausgebildet ist, abgeschrägt (Fig.1,2). Dadurch wird eine primär wirkende, große Lichtaustrittsfläche geschaffen.

Das Gehäuse ist kugelkalottenförmig ausgebildet und kann daher von Fahrzeugen problemlos überfahren werden, ohne ein Hindernis zu bilden.

Weiters ist der Deckel (3) mit Rippen (7) versehen, welche um die zentrale Achse (8) des Gehäuses kreisförmig angeordnet sind. Diese Rippen dienen vor allem der Verringerung der Rutschgefahr.

Im allgemeinen ist die Warnleuchte über ihre Konsole (1) durch Schrauben (5) mit der Ladefläche (9) verbunden. Insbesonders bei mehrfach faltbaren Ladeboardwänden ist eine fix angeordnete Warnleuchte unpraktisch, da sie ein vollständiges Zusammenfalten der Wände verhindern würde. Die Warnleuchte kann daher an der Ladefläche über eine Steckverbindung angeordnet werden. Die Konsole (1) der Warnleuchte ist dafür mit mehreren Führungsbolzen (10) versehen, welche in entsprechende Ausnehmungen in der Ladefläche (9) eingeführt werden können (Fig.5).

Die von der Fahrzeugelektrik kommende Versorgungsleitung zum Betreiben der Warnleuchte bildet dabei einen offenen Stromkreis. Beim Entfalten der Ladefläche wird dadurch ein akkustischer Signalgeber betätigt, der insbesonders auf das Anordnen der Warnleuchte aufmerksam macht.

Die Warnleuchte ist neben den Führungsbolzen daher auch mit mindestens einem stromführenden Kontaktbolzen (11) versehen, der durch Einführen in die entsprechende(n) Einpreßbuchse(n) (12) in der Ladefläche der Stromkreis schließt und den akkustischen Signalgeber abstellt.

## Patentansprüche

1. Warnleuchte, insbesonders zur Sicherung bewegter Flächen bei Fahrzeugen, mit einem Gehäuse und einer im Gehäuse angeordneten Lichtquelle, wobei das Gehäuse aus einer Konsole (1) und einem mit dieser verbundenen Deckel (3) besteht, der Deckel aus lichtundurchlässigem und die Konsole aus lichtdurchlässigem Material besteht und der Deckel kappenförmig ausgebildet ist, wobei das Gehäuse über einen größeren Bereich abgeschrägt ist, um eine große Austrittsfläche (6) für das Licht zu schaffen, dadurch gekennzeichnet, daß der Rand der Konsole (1) im Anschlußbereich an den Deckel (3) hochgezogen ist, um über den gesamten Umfang der Konsole (1) Lichtaustritt zu ermöglichen.

2. Warnleuchte nach Anspruch 1, dadurch gekennzeichnet, daß das Gehäuse kugelkalottenförmig ausgebildet ist.

3. Warnleuchte nach den Ansprüchen 1 und 2, dadurch gekennzeichnet, daß der Deckel (3) und die Konsole (1) aus Kunststoff sind.

4. Warnleuchte nach den Ansprüchen 1 bis 3, dadurch gekennzeichnet, daß der Deckel (3) mit der Konsole (1) über Schrauben (2) verbunden ist.

5. Warnleuchte nach Anspruch 1, dadurch gekennzeichnet, daß der Deckel (3) außenseitig mit Rippen (7) versehen ist.

6. Warnleuchte nach Anspruch 5, dadurch gekennzeichnet, daß die Rippen (7) kreisförmig um die Mittelachse (8) des Gehäuses angeordnet sind.

7. Warnleuchte nach Anspruch 1, dadurch gekennzeichnet, daß die Konsole (1) an ihrer Unterseite mit Führungsbolzen (10) und mindestens einem stromführenden Kontaktbolzen (11) versehen ist.

8. Warnleuchte nach den Ansprüchen 1 und 7, dadurch gekennzeichnet, daß die Konsole (1) mit der bewegten Fläche über die Führungsbolzen (10) oder Schrauben (5) lösbar verbunden ist.

## Claims

1. Warning lamp particularly for safety on moving surfaces of vehicles having a housing and a light source arranged in the housing, wherein the housing consists of a base member (1) and a lid (3) connected with this, the lid consists of light impermeable and the base member of light permeable material and the lid is constructed in the shape of a cap wherein the housing is chamfered off over a large region in order to create a large outlet surface (6) for the light, characterised in that the edge of the base member (1) in the region where it contacts against the lid (3) is raised in order to permit light to emerge over the entire periphery of the base member (1).

2. Warning lamp according to Claim 1,
characterised in that the housing is constructed as a spherical cap shape.

3. Warning lamp according to Claim 1 and 2,
characterised in that the lid (3) and the base member (1) are of plastics.

4. Warning lamp according to Claims 1 to 3,
characterised in that the lid (3) is connected to the base member (1) by means of screws (2).

5. Warning lamp according to Claim 1,
characterised in that the lid (3) is provided on its outer side with ribs (7).

6. Warning lamp according to Claim 5,
characterised in that the ribs (7) are arranged circularly about the central axis (8) of the housing.

7. Warning lamp according to Claim 1,
characterised in that the base member (1) is provided on its underside with guide pins (10) and at least one current carrying contact pin (11).

8. Warning lamp according to Claims 1 and 7,
characterised in that the base member (1) is releasably connected to the moving surface via the guide pins (10) or screws (5).

## Revendications

1. Lampe d'avertissement, notamment pour protéger des surfaces mobiles de véhicules, comportant un boîtier et une source lumineuse disposée dans le boîtier, sachant que le boîtier se compose d'une console (1) et d'un couvercle (3) relié à cette dernière, que le couvercle se compose d'un matériau opaque à la lumière et la console d'un matériau transparent à la lumière, et que le couvercle est réalisé en forme de capot, sachant qu'une partie relativement importante du boîtier est inclinée pour créer une grande surface de sortie (6) pour la lumière, caractérisée en ce que le bord de la console (1) est relevé dans la zone de raccordement au couvercle (3) pour permettre à la lumière de sortir sur tout le pourtour de la console (1).

2. Lampe d'avertissement selon la revendication 1, caractérisée en ce que le boîtier est réalisé en forme de calotte sphérique.

3. Lampe d'avertissement selon les revendications 1 et 2, caractérisée en ce que le couvercle (3) et la console (1) sont en matière plastique.

4. Lampe d'avertissement selon les revendications 1 à 3, caractérisée en ce que le couvercle (3) est relié à la console (1) par l'intermédiaire de vis (2).

5. Lampe d'avertissement selon la revendication 1, caractérisée en ce que le couvercle (3) est muni à l'extérieur de cannelures (7).

6. Lampe d'avertissement selon la revendication 5, caractérisée en ce que les cannelures (7) sont disposées de manière circulaire autour de l'axe médian (8) du boîtier.

7. Lampe d'avertissement selon la revendication 1, caractérisée en ce que la console (1) est munie sur sa face inférieure de broches-guides (10) et d'au moins une broche de contact (11) conductrice de courant.

8. Lampe d'avertissement selon les revendications 1 et 7, caractérisée en ce que la console (1) est reliée de manière amovible à la surface mobile par l'intermédiaire des broches-guides (10) ou de vis (5).
